# EUROPEAN PATENT APPLICATION

(11) **EP 4 510 274 A1**
(43) Date of publication of application: **19.02.2025**
(21) Application number: 22963206.2
(22) Date of filing: 28.10.2022
(51) Int. Cl.: H01M 10/056, H01M 4/13

(54) **BATTERY CELL, BATTERY AND ELECTRIC APPARATUS**

(71) Applicant: Contemporary Amperex Technology Co., Limited, Fujian 352100 (CN)
(72) Inventor: NIU, Congsu, Ningde City, Fujian 352100 (CN); LI, Xiaowei, Ningde City, Fujian 352100 (CN); LIU, Xiaomei, Ningde City, Fujian 352100 (CN)
(74) Representative: Kraus & Lederer PartGmbB
(86) International application number: PCT/CN2022/128425
(87) International publication number: WO 2024/087225

(57) **Abstract**

The present application provides a battery cell, a battery, and an electrical device, belonging to the field of battery technology. The battery cell includes a positive electrode sheet and an electrolyte solution. A coating mass of a positive electrode active material layer on a single side of the positive electrode sheet is 410 mg/1540.25 mm² to 550 mg/1540.25 mm², and a membrane resistance of the positive electrode sheet is ≤ 1 Ω. A conductivity of the electrolyte solution is ≥ 14 mS/cm. The battery cell has thick coated electrode sheets, where the lower membrane resistance of the positive electrode sheet indicates its higher conductivity, which is conducive to reducing solid-state ohmic resistance of the battery cell. The higher conductivity of the electrolyte solution is conducive to reducing liquid-phase ohmic impedance of the battery and alleviating concentration polarization to some extent. By simultaneously decreasing the membrane resistance of the positive electrode sheet and increasing the conductivity of the electrolyte solution, the battery cell can be fast charged under thick coating

## Description

### Technical Field

The present application relates to the field of battery technology, and in particular, to a battery cell, a battery, and an electrical device.

### Background Art

In recent years, as military and civilian energy storage systems are continuously updated and upgraded, higher requirements are put forward for energy densities of batteries.

Emerging high specific energy batteries have obvious advantages such as high energy density and low production cost, and are recyclable secondary batteries. However, the high specific energy batteries have poor fast charging performance, which may affect the application of the high specific energy batteries.

### Summary

In view of the above problems, the present application provides a battery cell, a battery, and an electrical device, with good fast charging performance.

In a first aspect, the present application provides a battery cell, which includes a positive electrode sheet and an electrolyte solution. A coating mass of a positive electrode active material layer on a single side of the positive electrode sheet is 410 mg/1540.25 mm² to 550 mg/1540.25 mm², and a membrane resistance of the positive electrode sheet is ≤ 1 Ω. A conductivity of the electrolyte solution is ≥ 14 mS/cm.

In this technical solution of the embodiments of the present application, the battery cell of the present application has the thick coated electrode sheet, and the conductivity of the positive electrode sheet affects direct current resistance of the battery cell. The lower membrane resistance of the positive electrode sheet indicates its higher conductivity, which is conducive to reducing solid-state ohmic resistance of the battery cell. The conductivity of the electrolyte solution affects liquid-phase ohmic impedance in ohmic impedance and concentration polarization in diffusion impedance. The higher conductivity of the electrolyte solution is conducive to decreasing the liquid-phase ohmic impedance of the battery and alleviating the concentration polarization to some extent. By simultaneously decreasing the membrane resistance of the positive electrode sheet and increasing the conductivity of the electrolyte solution, the battery cell can be fast charged under thick coating.

In some embodiments, the membrane resistance of the positive electrode sheet is ≤ 0.8 Ω, and the conductivity of the electrolyte solution is ≥ 16 mS/cm. When the membrane resistance of the positive electrode sheet is ≤ 0.8 Ω and the conductivity of the electrolyte solution is ≥ 16 mS/cm, the battery cell with a coating mass of 410 mg/1540.25 mm² to 470 mg/1540.25 mm² of the positive electrode active material layer on the single side of the positive electrode sheet at least can be fast charged within 30 min in 10% to 80% SOC.

In some embodiments, the membrane resistance of the positive electrode sheet is ≤ 0.5 Ω, and the conductivity of the electrolyte solution is ≥ 18 mS/cm. When the membrane resistance of the positive electrode is ≤ 0.5 Ω and the conductivity of the electrolyte solution is ≥ 18 mS/cm, the battery cell with a coating mass of 410 mg/1540.25 mm² to 550 mg/1540.25 mm² of the positive electrode active material layer on the single side of the positive electrode sheet at least can be fast charged within 30 min in 10% to 80% SOC.

In some embodiments, a powder resistance of a positive electrode active material of the positive electrode sheet is ≤ 30 Ω/cm. The powder resistance of the positive electrode active material affects the membrane resistance of the positive electrode sheet. When the powder resistance of the positive electrode active material of the positive electrode sheet is ≤ 30 Ω/cm, the membrane resistance of the positive electrode sheet is ≤ 1 Ω.

In some embodiments, the positive electrode active material includes a carbon-coated lithium iron phosphate material. The positive electrode active material affects the powder resistance of the positive electrode active material, and the powder resistance of the carbon-coated lithium iron phosphate material is ≤ 30 Ω/cm.

In some embodiments, a content of the positive electrode active material in the positive electrode sheet is ≥ 96 wt%. The content of the positive electrode active material in the positive electrode sheet affects the energy density of the battery cell. When the content of the positive electrode active material in the positive electrode sheet is ≥ 96 wt% and the coating mass of the positive electrode active material layer on the single side of the positive electrode sheet is 410 mg/1540.25 mm² to 550 mg/1540.25 mm², the energy density of the battery cell is relatively high.

In some embodiments, a compaction density of the positive electrode sheet is ≥ 2.55 g/m³. The compaction density of the positive electrode sheet affects the energy density of the battery cell. When the compaction density of the positive electrode sheet is ≥ 2.55 g/m³ and the coating mass of the positive electrode active material layer on the single side of the positive electrode sheet is 410 mg/1540.25 mm² to 550 mg/1540.25 mm², the energy density of the battery cell is relatively high.

In some embodiments, a porosity of the positive electrode sheet is 20% to 35%. The porosity of the positive electrode sheet corresponds to its compaction density. When the porosity of the positive electrode sheet is 20% to 35%, the battery cell has a relatively high energy density.

In some embodiments, a thickness of a positive electrode current collector of the positive electrode sheet is 10 µm to 20 µm. When the thickness of the positive electrode current collector of the positive electrode sheet is > 20 µm, the energy density of the battery cell is relatively low; when the thickness of the positive electrode current collector of the positive electrode sheet is < 10 µm, the positive electrode current collector is prone to cracking; and when the thickness of the positive electrode current collector of the positive electrode sheet is 10 µm to 20 µm, the battery cell has a high energy density, and the positive electrode current collector has good mechanical performance.

In some embodiments, the battery cell further includes a negative electrode sheet, a coating mass of a negative electrode active material layer on a single side of the negative electrode sheet of the battery cell is ≥ 180 mg/1540.25 mm², and a membrane resistance of the negative electrode sheet is ≤ 0.01 Ω. The coating mass of the negative electrode active material layer on the single side of the negative electrode sheet of the battery cell corresponds to the coating mass of the positive electrode active material layer on the single side of the positive electrode sheet.

In some embodiments, a compaction density of the negative electrode sheet is ≥ 1.67 g/m³. The compaction density of the negative electrode sheet affects the energy density of the battery cell. When the compaction density of the negative electrode sheet is ≥ 1.67 g/m³ and the coating mass of the negative electrode active material layer on the single side of the negative electrode sheet is ≥ 180 mg/1540.25 mm², the energy density of the battery cell is relatively high.

In some embodiments, a porosity of the negative electrode sheet is 25% to 40%. The porosity of the negative electrode sheet affects tortuosity of the negative electrode sheet. The increase in the porosity of the negative electrode sheet is beneficial to increasing the tortuosity of the negative electrode sheet and shortening a lithium ion transport path, thereby improving the fast charging performance of the battery.

In some embodiments, a thickness of a negative electrode current collector of the negative electrode sheet is 4 µm to 8 µm. When the thickness of the negative electrode current collector of the negative electrode sheet is > 8 µm, the energy density of the battery cell is relatively low; when the thickness of the negative electrode current collector of the negative electrode sheet is < 4 µm, the negative electrode current collector is prone to cracking; and when the thickness of the negative electrode current collector of the negative electrode sheet is 4 µm to 8 µm, the battery cell has a high energy density, and the negative electrode current collector has good mechanical performance.

In some embodiments, the battery cell further includes a separator having a thickness ≤ 7 µm. The thickness of the separator affects the energy density of the battery cell. When the thickness of the separator is ≤ 7 µm, the energy density of the battery cell is relatively high.

In a second aspect, the present application provides a battery, which includes the battery cell in the foregoing embodiments.

In a third aspect, the present application provides an electrical device, including the battery in the foregoing embodiment, where the battery is configured for providing electrical energy.

The above description is only a summary of the technical solutions of the present application. In order to understand the technical means of the present application more clearly, it can be implemented in accordance with the content of the specification; and in order to make the above and other objectives, features, and advantages of the present application more obvious and easier to understand, the specific embodiments of the present application are cited below.

### Brief Description of Drawings

By reading the detailed description of preferred embodiments below, various other advantages and benefits will become clear to those of ordinary skill in the art. The accompanying drawings are only used to illustrate the preferred embodiments and are not considered as a limitation on the present application. Moreover, in all the drawings, the same reference numerals denote the same components. In the figures:
FIG. 1 is a schematic structural diagram of a vehicle provided in some embodiments of the present application;
FIG. 2 is an exploded view of a battery provided in some embodiments of the present application; and
FIG. 3 is an exploded schematic structural diagram of a first battery cell provided in some embodiments of the present application.

The reference numerals in the specific embodiments are as follows:
1000 - vehicle;
100 - battery; 200 - controller; 300 - motor;
10 - box; 11 - first portion; 12 - second portion;
20 - battery cell; 21 - end cover; 22 - shell; 23 - electrode assembly.

### Detailed Description of Embodiments

The embodiments of the technical solutions of the present application will be described in detail below with reference to the accompanying drawings. The following embodiments are only used to illustrate the technical solutions of the present application more clearly, and therefore are only examples and cannot be used to limit the protection scope of the present application.

Unless otherwise defined, all technical and scientific terms used herein have the same meanings as those commonly understood by technical personnel in the technical field of the present application; the terms used herein are only for the purpose of describing specific embodiments and are not intended to limit the present application; and the terms "include" and "have" in the specification and claims of the present application, the accompanying drawings, and any variations thereof, are intended to cover non-exclusive inclusion.

In the description of the embodiments of the present application, the technical terms "first", "second", and the like are only used to distinguish different objects and cannot be understood as indicating or implying relative importance or implying a quantity, specific order, or primary and secondary relationship of the indicated technical features. In the description of the embodiments of the present application, the meaning of "a plurality of" is two or more, unless otherwise specifically defined.

The phrase "embodiment" referred to herein means that specific features, structures, or characteristics described in conjunction with the embodiment may be included in at least one embodiment of the present application. The phrase at various locations in the specification does not necessarily refer to the same embodiment, or an independent or alternative embodiment exclusive of another embodiment. Those skilled in the art understand, in explicit and implicit manners, that an embodiment described herein may be combined with another embodiment.

In the description of the embodiments of the present application, the term "and/or" in the present application is merely an association relationship for describing associated objects, and represents that three relationships may exist. For example, A and/or B may represent the following three cases: A exists alone, both A and B exist, and B exists alone. In addition, the character "/" herein generally indicates an "or" relationship between successive associated objects.

In the description of the embodiments of the present application, the term "a plurality of" means two (inclusive) or more. Similarly, "a plurality of groups" means two (inclusive) or more groups, and "a plurality of pieces" means two (inclusive) or more pieces.

In the description of the embodiments of the present application, an orientation or positional relationship indicated by the technical term "center", "longitudinal", "transverse", "length", "width", "thickness", "upper", "lower", "front", " back", "left", "right", "vertical", "horizontal", "top", "bottom", "internal", "external", "clockwise", "counterclockwise", "axial direction", "radial direction", "circumferential direction", or the like is based on an orientation or positional relationship shown in the drawings, and is merely for ease of describing the embodiments of the present application and simplifying the description, but does not indicate or imply that an apparatus or an element referred to must have a specific orientation or be constructed and operated in a specific orientation, and therefore cannot be understood as a limitation on the embodiments of the present application.

In the description of the embodiments of the present application, unless otherwise explicitly specified and defined, the terms "mounted", "connected", "connection", "fixed", and the like should be understood in a broad sense, for example, "connection" may be a fixed connection, a detachable connection, an integrated connection, a mechanical connection, an electrical connection, a direct connection, an indirect connection via an intermediate medium, communication between interiors of two elements, or interaction between two elements. Those of ordinary skill in the art may appreciate the specific meanings of the foregoing terms in the embodiments of the present application according to specific circumstances.

At present, in view of the development of the market situation, use of power batteries is increasingly widespread. Power batteries are not only used in energy storage power systems such as hydropower, firepower, wind power, and solar power plants, but also widely used in electric vehicles such as electric bicycles, electric motorcycles, and electric vehicles, as well as in various fields such as military equipment and aerospace. With the continuous expansion of the application fields of power batteries, their market demand is also increasing.

The inventor noticed that high specific energy batteries have poor fast charging performance, which may affect the application of the high specific energy batteries.

In order to alleviate the problem of poor fast charging performance of the high specific energy batteries, the inventor found by research that, as the coating mass of an active material layer on an electrode sheet of a battery cell increases, the thickness of the electrode sheet increases, which will increase polarization of the battery cell and then lead to deterioration of fast charging of the battery cell. The polarization of the battery cell under thick coating is mainly derived from ohmic impedance and diffusion impedance, where liquid-phase ohmic impedance in the ohmic impedance and concentration polarization in the diffusion impedance are both affected to some extent by an electrolyte solution. As the coating mass of the active material layer of the battery cell increases, the liquid-phase ohmic impedance and concentration polarization of the battery under fast charging increase. In addition, the liquid-phase ohmic impedance in the ohmic impedance may be defined by membrane resistance (conductivity) of the positive electrode sheet, where the conductivity of the positive electrode sheet affects direct current resistance.

Based on the above considerations, in order to improve the fast charging performance of high specific energy batteries, the inventor conducted in-depth research and designed a battery cell. The battery cell in the present application has thick coated electrode sheets, where the conductivity of the positive electrode sheet affects direct current resistance of the battery cell. The lower membrane resistance of the positive electrode sheet indicates its higher conductivity, which is conducive to reducing solid-state ohmic resistance of the battery cell. The conductivity of the electrolyte solution affects liquid-phase ohmic impedance in ohmic impedance and concentration polarization in diffusion impedance. The higher conductivity of the electrolyte solution is conducive to decreasing the liquid-phase ohmic impedance of the battery and alleviating the concentration polarization to some extent. By simultaneously decreasing the membrane resistance of the positive electrode sheet and increasing the conductivity of the electrolyte solution, the battery cell can be fast charged under thick coating.

The battery mentioned in the embodiments of the present application refers to a single physical module that includes a plurality of battery cells to provide higher voltage and capacity. The battery generally includes a battery box for packaging the plurality of battery cells, and the battery box may prevent liquid or other foreign matters from affecting charging or discharging of the battery cells.

Each battery cell is a secondary battery, or may be a lithium-ion battery, a lithium-sulfur battery, a sodium-ion battery, or a magnesium-ion battery, but is not limited to this. The battery cell may be cylindrical, flat, cuboid, or in other shapes. The battery cells are generally divided into three types according to ways of packaging: cylindrical battery cells, square battery cells, and soft packaged battery cells.

The battery cell includes an electrode assembly and an electrolyte solution, and the electrode assembly is composed of a positive electrode sheet, a negative electrode sheet, and a separator. The battery cell mainly relies on movement of metal ions between the positive electrode sheet and the negative electrode sheet to work. The positive electrode sheet includes a positive electrode current collector and a positive electrode active material layer, a surface of the positive electrode current collector is coated with the positive electrode active material layer, and the positive electrode current collector not coated with the positive electrode active material layer protrudes from the positive electrode current collector coated with the positive electrode active material layer and is used as a positive tab. In an example of a lithium-ion battery, a material of the positive electrode current collector may be aluminum, and the positive electrode active material may be lithium cobalate, lithium iron phosphate, ternary lithium, lithium manganate, or the like. The negative electrode sheet includes a negative electrode current collector and a negative electrode active material layer, a surface of the negative electrode current collector is coated with the negative electrode active material layer, and the negative electrode current collector not coated with the negative electrode active material layer protrudes from the negative electrode current collector coated with the negative electrode active material layer and is used as a negative tab. A material of the negative electrode current collector may be copper, and the negative electrode active material may be carbon, silicon, or the like. In order to ensure that no fusing occurs when high current passes through, there is a plurality of positive tabs stacked together, and there is a plurality of negative tabs stacked together. A material of the separator may be polypropylene (PP), polyethylene (PE), or the like. Moreover, the electrode assembly may be of a wound structure or a stacked structure, and the embodiments of the present application are not limited thereto.

The battery cell further includes a current collecting component, which is configured for electrically connecting a tab and an electrode terminal of the battery cell to transport electrical energy from the electrode assembly to the electrode terminal, and then to the outside of the battery cell via the electrode terminal; and the plurality of battery cells are electrically connected through the current collecting component to achieve series, parallel, or series-parallel connection of the plurality of battery cells.

The battery further includes a sampling terminal and a battery management system, and the sampling terminal is connected to the current collecting component to collect information of the battery cell, such as voltage or temperature. The sampling terminal transmits the collected information of the battery cell to the battery management system. When detecting that the information of the battery cell exceeds a normal range, the battery management system limits output power of the battery to achieve safety protection.

It may be understood that the applicable electrical device using the battery described in the embodiments of the present application may be in various forms, such as a mobile phone, a portable device, a notebook computer, a scooter, an electric vehicle, a ship, a spacecraft, an electric toy, or an electric tool. For example, the spacecraft includes an airplane, a rocket, a space shuttle, a spaceship, or the like; the electric toy includes a fixed or mobile electric toy, such as a game console, an electric car toy, an electric ship toy, or an electric aircraft toy; and the electric tool includes a metal cutting electric tool, a grinding electric tool, an assembly electric tool, or a railway electric tool, such as an electric drill, an electric grinder, an electric wrench, an electric screwdriver, an electric hammer, an impact electric drill, a concrete vibrator, or an electric planer.

The battery cell and the battery described in the embodiments of the present application are not only applicable to the electrical devices described above, but also applicable to all electrical devices using the battery cell and the battery. However, for brief description, the following embodiments are all described by an example of an electric vehicle.

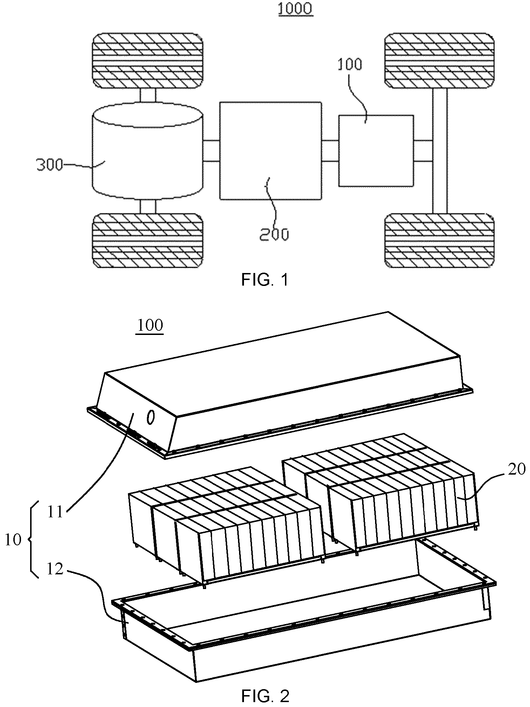

Refer to FIG. 1. FIG. 1 is a schematic structural diagram of a vehicle provided in some embodiments of the present application. The vehicle 1000 may be a fuel-powered vehicle, a gas-powered vehicle, or a new energy vehicle, and the new energy vehicle may be a battery electric vehicle, a hybrid vehicle, an extended-range vehicle, or the like. A battery 100 is disposed inside the vehicle 1000, and the battery 100 may be disposed at a bottom, head or tail of the vehicle 1000. The battery 100 may be configured to supply power to the vehicle 1000. For example, the battery 100 may be used as an operation power supply of the vehicle 1000. The vehicle 1000 may further include a controller 200 and a motor 300. The controller 200 is configured to control the battery 100 to supply power to the motor 300, for example, for a working power demand of the vehicle 1000 during startup, navigation and running.

In some embodiments of the present application, the battery 100 may be used not only as an operation power supply of the vehicle 1000, but also as a driving power supply of the vehicle 1000 to replace or partially replace fuel or natural gas to provide driving power for the vehicle 1000.

Refer to FIG. 2. FIG. 2 is an exploded view of a battery provided in some embodiments of the present application. The battery 100 includes a box 10 and battery cells 20, where the battery cells 20 are accommodated in the box 10. The box 10 is configured for providing an accommodating space for the battery cells 20, and the box 10 may have many structures. In some embodiments, the box 10 may include a first portion 11 and a second portion 12, the first portion 11 and the second portion 12 cover each other, and the first portion 11 and the second portion 12 jointly confine the accommodating space for accommodating the battery cells 20. The second portion 12 may be of a hollow structure with an opening at one end, the first portion 11 may be of a plate-like structure, and the first portion 11 covers an open side of the second portion 12, so that the first portion 11 and the second portion 12 jointly confine the accommodating space; or each of the first portion 11 and the second portion 12 may be of a hollow structure with an open side, and the open side of the first portion 11 covers the open side of the second portion 12. Of course, the box 10 formed by the first portion 11 and the second portion 12 may be in various shapes, such as cylindrical or cuboid.

There may be a plurality of battery cells 20 in the battery 100, and the plurality of battery cells 20 may be in series connection, parallel connection, or series-parallel connection. The series-parallel connection refers to a combination of series connection and parallel connection in the plurality of battery cells 20. The plurality of battery cells 20 may be directly connected in series, in parallel, or in series and parallel together, and then the whole formed by the plurality of battery cells 20 is accommodated in the box 10. Of course, the battery 100 may alternatively be in a form of a battery module formed by first connecting the plurality of battery cells 20 in series, in parallel, or in series and parallel, and a plurality of battery modules are then connected in series, in parallel, or in series and parallel to form a whole accommodated in the box 10. The battery 100 may further include other structures, for example, the battery 100 may further include a current collecting component for achieving electrical connection between the battery cells 20.

Each battery cell 20 is a secondary battery, or may be a lithium-ion battery, a lithium-sulfur battery, a sodium-ion battery, or a magnesium-ion battery, but is not limited to this. The battery cell 20 may be cylindrical, flat, cuboid, or in other shapes.

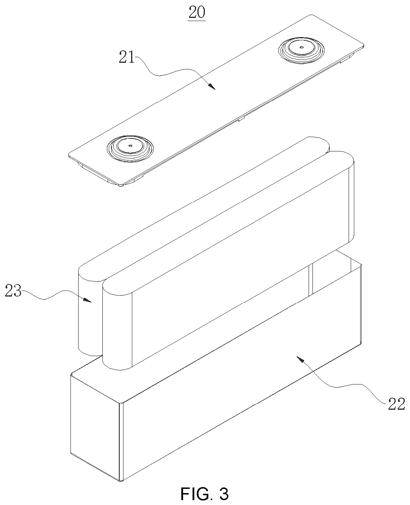

Refer to FIG. 3. FIG. 3 is an exploded schematic structural diagram of a first battery cell provided in some embodiments of the present application. The battery cell 20 refers to a minimum unit that constitutes a battery. As shown in FIG. 3, the battery cell 20 includes an end cover 21, a shell 22, an electrode assembly 23, and other functional components.

The end cover 21 refers to a component that covers an opening of the shell 22 to isolate an internal environment of the battery cell 20 from an external environment. Unlimitedly, a shape of the end cover 21 may adapt to that of the shell 22 to fit the shell 22. Optionally, the end cover 21 may be made of a material with certain hardness and strength (such as aluminum alloy). In this case, the end cover 21 is less prone to deformation during extrusion and deformation, so that the battery cell 20 can have higher structural strength and its safety performance can be improved. Functional components such as an electrode terminal may be disposed on the end cover 21. The electrode terminal may be used for electrical connection with the electrode assembly 23 to output or input electrical energy of the battery cell 20. In some embodiments, a pressure relief mechanism may be further disposed on the end cover 21 to release internal pressure when the internal pressure or temperature of the battery cell 20 reaches a threshold. A material of the end cover 21 may be various, such as copper, iron, aluminum, stainless steel, aluminum alloy, or plastic, and is not specially limited in the embodiments of the present application. In some embodiments, an insulating member may further be disposed on an inner side of the end cover 21, and the insulating member may be configured for isolating electrical connection components inside the shell 22 from the end cover 21 to reduce the risk of short circuits. For example, the insulating member may be made of plastic, rubber, or the like.

The shell 22 is a component fitting the end cover 21 to form the internal environment of the battery cell 20, where the formed internal environment may be used for accommodating the electrode assembly 23, an electrolyte solution, and other components. The shell 22 and the end cover 21 may be independent components, the shell 22 may be provided with an opening, and the end cover 21 covers the opening to form the internal environment of the battery cell 20. Unlimitedly, the end cover 21 and the shell 22 may be integrated. Specifically, the end cover 21 and the shell 22 may form a common connection surface before other components are put into the shell. When the interior of the shell 22 is required to be encapsulated, the end cover 21 covers the shell 22. The shell 22 may be in various shapes and sizes, such as cuboid, cylinder, or hexagonal prism. Specifically, the shape of the shell 22 may be determined according to a specific shape and size of the electrode assembly 23. A material of the shell 22 may be various, such as copper, iron, aluminum, stainless steel, aluminum alloy, or plastic, and is not specially limited in the embodiments of the present application.

The electrode assembly 23 is a component that undergoes electrochemical reactions in the battery cell 20. The shell 22 may contain one or more electrode assemblies 23. The electrode assembly 23 is mainly formed by winding or stacking positive electrode sheets and negative electrode sheets, and a separator is usually disposed between the positive electrode sheets and the negative electrode sheets. Portions of the positive electrode sheets and the negative electrode sheets with active materials form a main body of the electrode assembly, while portions of the positive electrode sheets and the negative electrode sheets without the active materials form tabs separately. The positive tab and the negative tab may be located at one end of the main body together or at two ends of the main body separately. In charging and discharging processes of the battery, the positive electrode active material and the negative electrode active material react with the electrolyte solution, and the tabs are connected to the electrode terminals to form a current circuit.

According to some embodiments of the present application, the present application provides a battery cell, including a positive electrode sheet and an electrolyte solution. A coating mass of a positive electrode active material layer on a single side of the positive electrode sheet is 410 mg/1540.25 mm² to 550 mg/1540.25 mm², and a membrane resistance of the positive electrode sheet is ≤ 1 Ω. A conductivity of the electrolyte solution is ≥ 14 mS/cm.

The coating mass of the positive electrode active material layer on the single side of the positive electrode sheet may be understood as the mass of the positive electrode active material layer formed by coating a side of a positive electrode current collector with a positive electrode active slurry and drying the slurry, including a positive electrode active material, a conductive agent, a binder, and the like.

For example, the coating mass of the positive electrode active material layer on the single side of the positive electrode may be 410 mg/1540.25 mm², 420 mg/1540.25 mm², 430 mg/1540.25 mm², 440 mg/1540.25 mm², 450 mg/1540.25 mm², 460 mg/1540.25 mm², 470 mg/1540.25 mm², 480 mg/1540.25 mm², 490 mg/1540.25 mm², 500 mg/1540.25 mm², 510 mg/1540.25 mm², 520 mg/1540.25 mm², 530 mg/1540.25 mm², 540 mg/1540.25 mm², or 550 mg/1540.25 mm².

Optionally, the coating mass of the positive electrode active material layer on the single side of the positive electrode sheet is ≥ 450 mg/1540.25 mm².

Optionally, the coating mass of the positive electrode active material layer on the single side of the positive electrode sheet is ≥ 500 mg/1540.25 mm².

The membrane resistance of the positive electrode sheet is tested by using a well-known testing method in the art. For example, an embodiment of the present application provides a testing method for the membrane resistance of the positive electrode sheet:

The positive electrode sheet is longitudinally sampled to obtain a 4 cm*25 cm sample, a two-probe membrane resistance tester is turned on, and a single point mode is selected, where the test area of an input terminal is 154.02 mm², 20 parallel samples are selected, pressure is 0.4 t, and a time interval is 15 s. The tested electrode sheet is placed between probes, a run button on software is clicked, then a reversing valve is pulled downwards, and a data is automatically collected after 15 s. When another point is selected, the testing method is the same as before. After 20 points are tested, another group is tested.

For example, the membrane resistance of the positive electrode sheet may be 0.02 Ω, 0.05 Ω, 0.08 Ω, 0.1 Ω, 0.2 Ω, 0.3 Ω, 0.4 Ω, 0.5 Ω, 0.6 Ω, 0.7 Ω, 0.8 Ω, 0.9 Ω, or 1 Ω.

The conductivity of the electrolyte solution is tested by using a well-known testing method in the art. For example, an embodiment of the present application provides a testing method for the conductivity of the electrolyte solution:

About 100 ml of electrolyte solution sample is transferred to a dry and clean corrosion-resistant sample bottle, and the sample bottle is sealed, placed in a 25°C ±0.5 °C thermostatic water bath and shaken sometimes to heat the sample uniformly. When the temperature of the sample is constant, a cap of the sample bottle is replaced with a rubber stopper with an electrode. When the temperature is within a range of 25°C±0.5°C, a data on a conductivity meter is read to obtain the conductivity of the tested sample.

For example, the conductivity of the electrolyte solution may be 14 mS/cm, 15 mS/cm, 16 mS/cm, 17 mS/cm, 18 mS/cm, 19 mS/cm, or 20 mS/cm.

Optionally, 14 mS/cm ≤ the conductivity of the electrolyte solution ≤ 30 mS/cm.

The battery cell of the present application has the thick coated electrode sheet, and the conductivity of the positive electrode sheet affects direct current resistance of the battery cell. The lower membrane resistance of the positive electrode sheet indicates its higher conductivity, which is conducive to reducing solid-state ohmic resistance of the battery cell. The conductivity of the electrolyte solution affects liquid-phase ohmic impedance in ohmic impedance and concentration polarization in diffusion impedance. The higher conductivity of the electrolyte solution is conducive to decreasing the liquid-phase ohmic impedance of the battery and alleviating the concentration polarization to some extent. By simultaneously decreasing the membrane resistance of the positive electrode sheet and increasing the conductivity of the electrolyte solution, the battery cell can be fast charged under thick coating.

Optionally, the electrolyte solution includes an electrolyte, an organic solvent, and a film forming additive.

The electrolyte is LiPF6, and a concentration of the electrolyte in the electrolyte solution is 0.8 mol/L to 1.3 mol/L.

The organic solvent includes ethylene carbonate, methyl ethyl carbonate, or dimethyl carbonate.

According to some embodiments of the present application, optionally, the membrane resistance of the positive electrode sheet is ≤ 0.8 Ω, and the conductivity of the electrolyte solution is ≥ 16 mS/cm.

When the membrane resistance of the positive electrode sheet is ≤ 0.8 Ω and the conductivity of the electrolyte solution is ≥ 16 mS/cm, the battery cell with a coating mass of 410 mg/1540.25 mm² to 470 mg/1540.25 mm² of the positive electrode active material layer on the single side of the positive electrode sheet at least can be fast charged within 30 min in 10% to 80% SOC.

According to some embodiments of the present application, optionally, the membrane resistance of the positive electrode sheet is ≤ 0.5 Ω, and the conductivity of the electrolyte solution is ≥ 18 mS/cm.

When the membrane resistance of the positive electrode is ≤ 0.5 Ω and the conductivity of the electrolyte solution is ≥ 18 mS/cm, the battery cell with a coating mass of 410 mg/1540.25 mm² to 550 mg/1540.25 mm² of the positive electrode active material layer on the single side of the positive electrode sheet at least can be fast charged within 30 min in 10% to 80% SOC.

According to some embodiments of the present application, optionally, a powder resistance of a positive electrode active material of the positive electrode sheet is ≤ 30 Ω/cm.

For example, the powder resistance of the positive electrode active material of the positive electrode sheet may be 5 Ω/cm, 8 Ω/cm, 10 Ω/cm, 12 Ω/cm, 15 Ω/cm, 18 Ω/cm, 20 Ω/cm, 22 Ω/cm, 25 Ω/cm, 28 Ω/cm, or 30 Ω/cm.

The powder resistance of the positive electrode active material affects the membrane resistance of the positive electrode sheet. When the powder resistance of the positive electrode active material of the positive electrode sheet is ≤ 30 Ω/cm, the membrane resistance of the positive electrode sheet is ≤ 1 Ω.

According to some embodiments of the present application, optionally, the positive electrode active material includes a carbon-coated lithium iron phosphate material.

A structural formula of the lithium iron phosphate material is LiMaFe1-aPO4, where M is selected from any one or more of Cu, Mn, Cr, Zn, Pb, Ca, Co, Ni, Sr, Nb and Ti, and 0≤a≤1.

Optionally, a mass percentage of a carbon element in the carbon-coated lithium iron phosphate material is 0.1 wt% to 5 wt%.

The positive electrode active material affects the powder resistance of the positive electrode active material, and the powder resistance of the carbon-coated lithium iron phosphate material is ≤ 30 Ω/cm.

According to some embodiments of the present application, optionally, a content of the positive electrode active material in the positive electrode sheet is ≥ 96 wt%.

For example, the content of the positive electrode active material in the positive electrode sheet may be 96 wt%, 96.5 wt%, 97 wt%, 97.5 wt%, 98 wt%, or 98.5 wt%.

Optionally, the content of the positive electrode active material in the positive electrode sheet is 96 wt% to 98.5 wt%.

The content of the positive electrode active material in the positive electrode sheet affects the energy density of the battery cell. When the content of the positive electrode active material in the positive electrode sheet is ≥ 96 wt% and the coating mass of the positive electrode active material layer on the single side of the positive electrode sheet is 410 mg/1540.25 mm² to 550 mg/1540.25 mm², the energy density of the battery cell is relatively high.

Optionally, the positive electrode active material layer of the positive electrode sheet includes 96 wt% to 98.5 wt% of the positive electrode active material, 0 to 1 wt% of a conductive agent, 1 wt% to 3 wt% of a binder, and 0 to 1 wt% of a dispersant.

The conductive agent includes conductive carbon black SP and/or carbon nanotubes CNT; and the binder includes polyvinylidene fluoride (PVDF).

According to some embodiments of the present application, optionally, a compaction density of the positive electrode sheet is ≥ 2.55 g/m³.

For example, the compaction density of the positive electrode sheet may be 2.55 g/m³, 2.6 g/m³, 2.65 g/m³, 2.7 g/m³, or 2.75 g/m³.

Optionally, the compaction density of the positive electrode sheet is ≥ 2.6 g/m³.

The compaction density of the positive electrode sheet affects the energy density of the battery cell. When the compaction density of the positive electrode sheet is ≥ 2.55 g/m³ and the coating mass of the positive electrode active material layer on the single side of the positive electrode sheet is 410 mg/1540.25 mm² to 550 mg/1540.25 mm², the energy density of the battery cell is relatively high.

According to some embodiments of the present application, optionally, a porosity of the positive electrode sheet is 20% to 35%.

For example, the porosity of the positive electrode sheet may be 20%, 21%, 22%, 23%, 24%, 25%, 26%, 27%, 28%, 29%, 30%, 31%, 32%, 33%, 34%, or 35%.

Optionally, the porosity of the positive electrode sheet is 22% to 30%.

The porosity of the positive electrode sheet corresponds to its compaction density. When the porosity of the positive electrode sheet is 20% to 35%, the battery cell has a relatively high energy density.

According to some embodiments of the present application, optionally, a thickness of a positive electrode current collector of the positive electrode sheet is 10 µm to 20 µm.

For example, the thickness of the positive electrode current collector of the positive electrode sheet may be 10 µm. 11 µm. 12 µm. 13 µm. 14 µm. 15 µm. 16 µm. 17 µm. 18 µm. 19 µm, or 20 µm.

When the thickness of the positive electrode current collector of the positive electrode sheet is > 20 µm, the energy density of the battery cell is relatively low; when the thickness of the positive electrode current collector of the positive electrode sheet is < 10 µm, the positive electrode current collector is prone to cracking; and when the thickness of the positive electrode current collector of the positive electrode sheet is 10 µm to 20 µm, the battery cell has a high energy density, and the positive electrode current collector has good mechanical performance.

According to some embodiments of the present application, optionally, the battery cell further includes a negative electrode sheet, a coating mass of a negative electrode active material layer on a single side of the negative electrode sheet of the battery cell is ≥ 180 mg/1540.25 mm², and a membrane resistance of the negative electrode sheet is ≤ 0.01 Ω.

For example, the coating mass of the negative electrode active material layer on the single side of the negative electrode sheet of the battery cell may be 180 mg/1540.25 mm², 185 mg/1540.25 mm², 190 mg/1540.25 mm², 195 mg/1540.25 mm², 200 mg/1540.25 mm², 205 mg/1540.25 mm², 210 mg/1540.25 mm², 215 mg/1540.25 mm², 220 mg/1540.25 mm², 225 mg/1540.25 mm², 230 mg/1540.25 mm², 235 mg/1540.25 mm², 240 mg/1540.25 mm², or 245 mg/1540.25 mm².

Optionally, the coating mass of the negative electrode active material layer on the single side of the negative electrode sheet of the battery cell is ≥ 190 mg/1540.25 mm².

Optionally, the coating mass of the negative electrode active material layer on the single side of the negative electrode sheet of the battery cell is ≥ 200 mg/1540.25 mm².

The membrane resistance of the negative electrode sheet is tested by using a well-known testing method in the art. For example, an embodiment of the present application provides a testing method for the membrane resistance of the negative electrode sheet:

The negative electrode sheet is longitudinally sampled to obtain a 4 cm*25 cm sample, a two-probe membrane resistance tester is turned on, and a single point mode is selected, where the test area of an input terminal is 154.02 mm², 20 parallel samples are selected, pressure is 0.4 t, and a time interval is 15 s. The tested electrode sheet is placed between probes, a run button on software is clicked, then a reversing valve is pulled downwards, and a data is automatically collected after 15 s. When another point is selected, the testing method is the same as before. After 20 points are tested, another group is tested.

For example, the membrane resistance of the negative electrode sheet may be 0.005 Ω, 0.006 Ω, 0.007 Ω, 0.008 Ω, 0.009 Ω, or 0.01 Ω.

The coating mass of the negative electrode active material layer on the single side of the negative electrode sheet of the battery cell corresponds to the coating mass of the positive electrode active material layer on the single side of the positive electrode sheet.

Optionally, a content of a negative electrode active material in the negative electrode sheet is ≥ 96 wt%.

Optionally, the content of the negative electrode active material in the negative electrode sheet is 96 wt% to 98 wt%.

Optionally, the negative electrode active material layer of the negative electrode sheet includes 96 wt% to 98 wt% of the negative electrode active material, 0.5 wt% to 2 wt% of a conductive agent, and 2 wt% to 4 wt% of a binder.

The negative electrode active material includes graphite or a silicon carbon material, and the conductive agent includes conductive carbon black SP and/or carbon nanotubes CNT; the binder includes 0.5 wt% to 1.5 wt% of carboxymethylcellulose sodium (CMC-Na) and 1 wt% to 3 wt% of polymerized styrene butadiene rubber (SBR).

Optionally, the negative electrode sheet is coated in multiple layers, the negative electrode active material near a negative electrode current collector is high-compaction graphite, and the negative electrode active material away from the negative electrode current collector is fast charging graphite.

According to some embodiments of the present application, optionally, a compaction density of the negative electrode sheet is ≥ 1.67 g/m³.

For example, the compaction density of the negative electrode sheet may be 1.67 g/m³, 1.7 g/m³, 1.75 g/m³, 1.8 g/m³, 1.85 g/m³, 1.9 g/m³, 1.95 g/m³, or 2 g/m³.

Optionally, the compaction density of the negative electrode sheet is ≥ 1.75 g/m³.

Optionally, the compaction density of the negative electrode sheet is ≥ 1.8 g/m³.

The compaction density of the negative electrode sheet affects the energy density of the battery cell. When the compaction density of the negative electrode sheet is ≥ 1.67 g/m³ and the coating mass of the negative electrode active material layer on the single side of the negative electrode sheet is ≥ 180 mg/1540.25 mm², the energy density of the battery cell is relatively high.

According to some embodiments of the present application, optionally, a porosity of the negative electrode sheet is 25% to 40%.

For example, the porosity of the negative electrode sheet may be 25%, 26%, 27%, 28%, 29%, 30%, 31%, 32%, 33%, 34%, 35%, 36%, 37%, 38%, 39%, or 40%.

Optionally, the porosity of the negative electrode sheet is 27% to 35%.

Optionally, the porosity of the negative electrode sheet is 30% to 35%.

The porosity of the negative electrode sheet affects tortuosity of the negative electrode sheet. The increase in the porosity of the negative electrode sheet is beneficial to increasing the tortuosity of the negative electrode sheet and shortening a lithium ion transport path, thereby improving the fast charging performance of the battery.

It should be noted that the porosity of the negative electrode sheet may be improved by adding a pore forming agent to a negative electrode active slurry for preparing the negative electrode active material layer. For every 3 wt% of the pore forming agent added to the negative electrode active slurry, the porosity of the negative electrode sheet may increase by 0.5% to 1%. In order to ensure the adhesion of the negative electrode active material, the amount of the pore forming agent added to the negative electrode active slurry should not more than 25 wt%, and the pore forming agent evaporates after cold pressing of the negative electrode sheet.

According to some embodiments of the present application, optionally, a thickness of a negative electrode current collector of the negative electrode sheet is 4 µm to 8 µm.

For example, the thickness of the negative electrode current collector of the negative electrode sheet may be 4 µm, 5 µm, 6 µm, 7 µm, or 8 µm.

When the thickness of the negative electrode current collector of the negative electrode sheet is > 8 µm, the energy density of the battery cell is relatively low; when the thickness of the negative electrode current collector of the negative electrode sheet is < 4 µm, the negative electrode current collector is prone to cracking; and when the thickness of the negative electrode current collector of the negative electrode sheet is 4 µm to 8 µm, the battery cell has a high energy density, and the negative electrode current collector has good mechanical performance.

According to some embodiments of the present application, optionally, the battery cell further includes a separator having a thickness ≤ 7 µm.

For example, the thickness of the separator may be 1 µm, 2 µm, 3 µm, 4 µm, 5 µm, 6 µm, or 7 µm.

The thickness of the separator affects the energy density of the battery cell. When the thickness of the separator is ≤ 7 µm, the energy density of the battery cell is relatively high.

Optionally, the separator includes a base film, which is made of polypropylene or polyethylene.

The separator includes a base film and a functional layer, where the functional layer includes any one or more of a fireproof coating, a high electrolyte immersion coating, and a lithium-ion conductive coating.

The fireproof coating includes any one or more of aluminum oxide, zirconium oxide, titanium dioxide, and magnesium oxide.

The high electrolyte immersion coating includes any one or more of polyethylene, polypropylene, polytetrafluoroethylene, and polymerized styrene butadiene rubber.

The lithium-ion conductive coating includes lithium lanthanum titanium oxide and/or lithium lanthanum zirconium oxide.

The battery cell of the present application will be further described in detail below in conjunction with examples.

Parameters of positive electrode sheets of battery cells in Examples 1-13 and Comparative Examples 1-3 are shown in Table 1, and parameters of negative electrode sheets of the battery cells in Examples 1-13 and Comparative Examples 1-3 are shown in Table 2.

**Table 1 Parameters of positive electrode sheets of battery cells in Examples 1-13 and Comparative Examples 1-3**

| Item | Coating mass of positive electrode active material layer (mg/1540.2 5 mm²) | Membran e resistanc e of positive electrode (Ω) | Conductivit y of electrolyte solution (S/cm) | Powder resistanc e of positive electrode active material (Ω/cm) | Positive electrode active material | Porosity of positive electrod e sheet |
|---|---|---|---|---|---|---|
| Example 1 | 410 | 1 | 14 | 30 | LiFePO₄/ C | 26% |
| Example 2 | 410 | 0.8 | 16 | 20 | LiFePO₄/ C | 26% |
| Example 3 | 430 | 0.8 | 16 | 20 | LiFePO₄/ C | 26% |
| Example 4 | 470 | 0.8 | 16 | 20 | LiFePO₄/ C | 26% |
| Example 5 | 410 | 0.5 | 18 | 10 | LiFePO₄/ C | 26% |
| Example 6 | 430 | 0.5 | 18 | 10 | LiFePO₄/ C | 26% |
| Example 7 | 470 | 0.5 | 18 | 10 | LiFePO₄/ C | 26% |
| Example 8 | 550 | 0.5 | 18 | 10 | LiFePO₄/ C | 26% |
| Example 9 | 410 | 0.5 | 14 | 10 | LiFePO₄/ C | 26% |
| Example 10 | 410 | 1 | 16 | 30 | LiFePO₄/ C | 26% |
| Example 11 | 410 | 0.8 | 18 | 20 | LiFePO₄/ C | 26% |
| Example 12 | 410 | 1 | 14 | 30 | LiFePO₄/ C | 26% |
| Example 13 | 410 | 1 | 14 | 30 | LiFePO₄/ C | 26% |
| Comparativ e Example 1 | 410 | 1.2 | 14 | 50 | LiFePO₄/ C | 26% |
| Comparativ e Example 2 | 410 | 1 | 12 | 30 | LiFePO₄/ C | 26% |
| Comparativ e Example 3 | 410 | 0.8 | 12 | 20 | LiFePO₄/ C | 26% |

**Table 2: Parameters of negative electrode sheets of the battery cells in Examples 1-13 and Comparative Examples 1-3**

| Item | Coating mass of negative electrode active material layer (mg/1540.25 mm²) | Membrane resistance of negative electrode (Ω) | Negative electrode active material | Porosity of negative electrode sheet |
|---|---|---|---|---|
| Example 1 | 184 | 0.01 | Fast charging graphite + high-compaction graphite | 30% |
| Example 2 | 184 | 0.01 | Fast charging graphite + high-compaction graphite | 30% |
| Example 3 | 193 | 0.01 | Fast charging graphite + high-compaction graphite | 30% |
| Example 4 | 210 | 0.01 | Fast charging graphite + high-compaction graphite | 30% |
| Example 5 | 184 | 0.01 | Fast charging graphite + high-compaction graphite | 30% |
| Example 6 | 193 | 0.01 | Fast charging graphite + high-compaction graphite | 30% |
| Example 7 | 210 | 0.01 | Fast charging graphite + high-compaction graphite | 30% |
| Example 8 | 245 | 0.01 | Fast charging graphite + high-compaction graphite | 30% |
| Example 9 | 193 | 0.01 | Fast charging graphite + high-compaction graphite | 30% |
| Example 10 | 193 | 0.01 | Fast charging graphite + high-compaction graphite | 30% |
| Example 11 | 193 | 0.01 | Fast charging graphite + high-compaction graphite | 30% |
| Example 12 | 184 | 0.01 | Fast charging graphite + high-compaction graphite | 25% |
| Example 13 | 184 | 0.01 | Fast charging graphite + high-compaction graphite | 40% |
| Comparative Example 1 | 184 | 0.01 | Fast charging graphite + high-compaction graphite | 30% |
| Comparative Example 2 | 184 | 0.01 | Fast charging graphite + high-compaction graphite | 30% |
| Comparative Example 3 | 184 | 0.01 | Fast charging graphite + high-compaction graphite | 30% |

### Preparation method for the battery cells in Examples 1-3 and Comparative Examples 1-3:

### S1. Preparation of a positive electrode sheet

96.9 wt% of carbon-coated lithium iron phosphate material, 0.7 wt% of conductive carbon black, 0.1 wt% of carbon nanotubes, 1.8 wt% of polyvinylidene fluoride, and 0.5 wt% of ethyl cellulose were dissolved in an N-methyl pyrrolidone solvent respectively and stirred to prepare a positive electrode active slurry, then a surface of an aluminum foil having a thickness of 17 µm was uniformly coated with the prepared positive electrode active slurry, and the positive electrode sheet was obtained after drying and cold pressing.

### S2. Preparation of a negative electrode sheet

96.6 wt% of graphite, 1 wt% of conductive carbon black, 0.1 wt% of carbon nanotubes, 0.6 wt% of carboxymethylcellulose sodium and 1.7 wt% of polymerized styrene butadiene rubber were dissolved in ultra-pure water respectively to prepare a negative electrode active slurry, and then a surface of a copper foil having a thickness of 4.5 µm was uniformly coated with the prepared negative electrode active slurry, where a layer of fast charging graphite was far away from the aluminum foil, a layer of high-compaction graphite was close to the aluminum foil, and a thickness ratio of the two layers was 5:5; and the negative electrode sheet was obtained after drying and cold pressing.

### S3. Preparation of a battery cell

The prepared positive and negative electrode sheets were die-cut, slitted, and wound into an electrode assembly, where a separator included a 5 µm polyethylene base film with a 15 µm Al2O3 coating on the surface; and hot pressing was performed to compact a cell, the cell was then coated, welded with tabs, fixed with an adapter sheet and put into a shell, a top cover was welded to the shell to form a dry cell, the dry cell was baked to remove moisture, electrolyte was injected, the cell was charged with 0.1C constant current to a specified cut-off voltage to complete a formation process, an injection opening was welded by a sealing nail, the cell was then discharged with 0.33C constant current to complete a capacity process, and the cell was finally wrapped by a blue film to obtain the battery cell.

### Test Example 1

Energy densities and 10% to 80% SOC fast charging time of the battery cells in Examples 1-13 and Comparative Examples 1-3 were measured, respectively. Results were shown in Table 3.

A testing method for the energy densities of the battery cells was as follows:
Volume energy density of a battery cell = discharge capacity of the battery * discharge plateau voltage/ volume of the battery. The discharge capacity of the battery was a capacity of the battery when charged with 1/3C to 3.65V at 25°C and then discharged to 2.0V; the discharge plateau voltage was a potential at which the electrochemical reaction reached equilibrium, and may be automatically extracted by a general testing device; and the volume of the battery was a volume of water drained after the battery was placed in pure water. The battery capacity testing device was a battery tester.

A testing method for the 10% to 80% SOC fast charging time was as follows:

A stacked three-electrode testing method was used. Positive and negative electrode sheets of a hard shell cell were taken out and soaked in a DMC solvent for cleaning for more than 72 h. After a solvent, a lithium salt, and additives in an electrolyte solution were completely leached out, the electrode sheets were dried in a vacuum oven. Then, the negative and positive electrode sheets were assembled into a stacked three-electrode cell, with a copper wire as a reference electrode. Then, a lithium precipitation charging rate of the stacked three-electrode cell in each SOC was tested at 25°C, and a maximum charging rate was recorded at the potential of the reference electrode dropping to 0 mV in this SOC. According to this method, 5% SOC was regarded as a point, and the maximum charging rate at every 5% SOC, such as 5% SOC, 10% SOC, 15% SOC to 100% SOC, was tested; and continuous charging time at 10% to 80% SOC, namely, the fast charging time, was calculated according to the tested maximum charging rates at 10% to 80% SOC.

**Table 3 Energy densities and 10% to 80% SOC fast charging time of the battery cells in Examples 1-13 and Comparative Examples 1-3**

| Item | Energy density (Wh/L) | 10% to 80% SOC fast charging time (min) |
|---|---|---|
| Example 1 | 400 | 30 |
| Example 2 | 400 | 20 |
| Example 3 | 430 | 25 |
| Example 4 | 460 | 30 |
| Example 5 | 400 | 15 |
| Example 6 | 430 | 20 |
| Example 7 | 460 | 25 |
| Example 8 | 500 | 30 |
| Example 9 | 430 | 28 |
| Example 10 | 430 | 25 |
| Example 11 | 430 | 20 |
| Example 12 | 415 | 32 |
| Example 13 | 400 | 28 |
| Comparative Example 1 | 400 | 32 |
| Comparative Example 2 | 400 | 35 |
| Comparative Example 3 | 400 | 33 |

From Example 1, when the membrane resistance of the positive electrode sheet was 1 Ω and the conductivity of the electrolyte solution was 14 mS/cm, the battery cell with a coating mass of 410 mg/1540.25 mm² of the positive electrode active material layer on the single side of the positive electrode sheet can be fast charged within 10%-80%SOC@≤30min.

From Examples 2-4, when the membrane resistance of the positive electrode sheet was 0.8 Ω and the conductivity of the electrolyte solution was 16 mS/cm, the battery cell with a coating mass of 410 mg/1540.25 mm² to 470 mg/1540.25 mm² of the positive electrode active material layer on the single side of the positive electrode sheet can be fast charged within 10%-80%SOC@≤30min, where the shortest charging time can reach 20 min.

From Examples 5-8, when the membrane resistance of the positive electrode was 0.5 Ω and the conductivity of the electrolyte solution was 18 mS/cm, the battery cell with a coating mass of 410 mg/1540.25 mm² to 550 mg/1540.25 mm² of the positive electrode active material layer on the single side of the positive electrode sheet can be fast charged within 10%-80%SOC@≤30min, where the shortest charging time can reach 15 min.

By comparing Example 1, Example 4 and Example 8, as the coating mass of the positive electrode active material layer on the single side of the positive electrode sheet increases, the fast charging time of the battery cell within 30 min can be achieved by decreasing the membrane resistance of the positive electrode sheet and increasing the conductivity of the electrolyte solution.

By comparing Example 9 and Example 1, the fast charging time of the battery cell was shortened to 28 min by decreasing the membrane resistance of the positive electrode sheet to 0.8 Ω and remaining the conductivity of the electrolyte solution unchanged at 14 mS/cm.

By comparing Example 10 and Example 1, the fast charging time of the battery cell was shortened to 25 min by increasing the conductivity of the electrolyte solution to 16 mS/cm and remaining the membrane resistance of the positive electrode sheet unchanged at 1 Ω.

By comparing Example 11 and Example 1, the fast charging time of the battery cell was shortened to 20 min by decreasing the membrane resistance of the positive electrode sheet to 0.8 Ω and increasing the conductivity of the electrolyte solution to 18 mS/cm.

By comparing Example 12 and Example 1, the fast charging time of the battery cell was prolonged to 32 min by decreasing the porosity of the negative electrode sheet to 25%.

By comparing Example 13 and Example 1, the fast charging time of the battery cell was shortened to 28 min by increasing the porosity of the negative electrode to 40%.

By comparing Comparative Example 1 and Example 1, the fast charging time of the battery cell was prolonged to 32 min by increasing the membrane resistance of the positive electrode sheet to 1.2 Ω and remaining the conductivity of the electrolyte solution unchanged at 14 mS/cm.

By comparing Comparative Example 2 and Example 1, the fast charging time of the battery cell was prolonged to 35 min by decreasing the conductivity of the electrolyte solution to 12 mS/cm and remaining the membrane resistance of the positive electrode sheet unchanged at 1.2 Ω.

By comparing Comparative Example 3 and Example 1, the fast charging time of the battery cell was prolonged to 33 min by decreasing the membrane resistance of the positive electrode sheet to 0.8 Ω and decreasing the conductivity of the electrolyte solution to 12 mS/cm.

For the battery cells with poor fast charging performance in Comparative Examples 1-3, if the same fast charging conditions were used as in Example 1, the attenuation of the battery cells will accelerate and even dive, resulting in a decrease in cycles of batteries.

Finally, it should be noted that the foregoing embodiments are only used to describe, but not to limit, the technical solutions of the present application. Although the present application is described in detail with reference to the foregoing embodiments, those of ordinary skill in the art should understand that they can still make modifications to the technical solutions described in the foregoing embodiments or make equivalent substitutions to some or all technical features thereof. These modifications or substitutions do not make the essences of the corresponding technical solutions depart from the scope of the technical solutions of the embodiments of the present application, and shall fall within the scope of the claims and specification of the present application. In particular, as long as there is no structural conflict, various technical features mentioned in the embodiments may be combined in any manner. The present application is not limited to the specific embodiments disclosed herein, but includes all technical solutions falling within the scope of the claims.

## Claims

1. A battery cell, comprising a positive electrode sheet and an electrolyte solution,
wherein a coating mass of a positive electrode active material layer on a single side of the positive electrode sheet is 410 mg/1540.25 mm² to 550 mg/1540.25 mm², and a membrane resistance of the positive electrode sheet is ≤ 1 Ω; and
a conductivity of the electrolyte solution is ≥ 14 mS/cm.

2. The battery cell according to claim 1, wherein the membrane resistance of the positive electrode sheet is ≤ 0.8 Ω, and the conductivity of the electrolyte solution is ≥ 16 mS/cm.

3. The battery cell according to claim 1 or 2, wherein the membrane resistance of the positive electrode sheet is ≤ 0.5 Ω, and the conductivity of the electrolyte solution is ≥ 18 mS/cm.

4. The battery cell according to any one of claims 1-3, wherein a powder resistance of a positive electrode active material of the positive electrode sheet is ≤ 30 Ω/cm.

5. The battery cell according to claim 4, wherein the positive electrode active material comprises a carbon-coated lithium iron phosphate material.

6. The battery cell according to any one of claims 1-5, wherein a content of the positive electrode active material in the positive electrode sheet is ≥ 96 wt%.

7. The battery cell according to any one of claims 1-6, wherein a compaction density of the positive electrode sheet is ≥ 2.55 g/m³.

8. The battery cell according to any one of claims 1-7, wherein a porosity of the positive electrode sheet is 20% to 35%.

9. The battery cell according to any one of claims 1-8, wherein a thickness of a positive electrode current collector of the positive electrode sheet is 10 µm to 20 µm.

10. The battery cell according to any one of claims 1-9, further comprising a negative electrode sheet, wherein a coating mass of a negative electrode active material layer on a single side of the negative electrode sheet of the battery cell is ≥ 180 mg/1540.25 mm², and a membrane resistance of the negative electrode sheet is ≤ 0.01 Ω.

11. The battery cell according to claim 10, wherein a compaction density of the negative electrode sheet is ≥ 1.67 g/m³.

12. The battery cell according to claim 10 or 11, wherein a porosity of the negative electrode sheet is 25% to 40%.

13. The battery cell according to any one of claims 10-12, wherein a thickness of a negative electrode current collector of the negative electrode sheet is 4 µm to 8 µm.

14. The battery cell according to any one of claims 10-13, further comprising a separator, wherein a thickness of the separator is ≤ 7 µm.

15. A battery, comprising the battery cell according to any one of claims 1-14.

16. An electrical device, comprising the battery according to claim 15, wherein the battery is configured for providing electrical energy.
